# FASCICULE DE BREVET EUROPEEN

(11) **EP 1 890 935 B1**
(45) Date de publication et mention de la délivrance du brevet: **29.07.2009**
(21) Numéro de dépôt: 06764770.1
(22) Date de dépôt: 12.06.2006
(51) Int. Cl.: B64C 13/02, G05D 1/00

(54) **PROCEDE ET DISPOSITIF POUR LA CONDUITE D'UN AERONEF ROULANT SUR LE SOL**
VERFAHREN UND VORRICHTUNG ZUM ANTRIEB EINES FLUGZEUGS WÄHREND SEINES BODENLAUFS
METHOD AND DEVICE FOR DRIVING AN AIRCRAFT DURING THE GROUND RUN THEREOF

(30) Priorité: 15.06.2005 FR 0506042
(43) Date de publication de la demande: 27.02.2008
(73) Titulaire: AIRBUS France, 31060 Toulouse Cédex (FR)
(72) Inventeur: BELLOUARD, Rémi, F-31850 Montrabe (FR); MULLER, Jean, F-31170 Tournefeuille (FR)
(74) Mandataire: Bonnetat, Christian
(86) Numéro de dépôt international: PCT/FR2006/001320
(87) Numéro de publication internationale: WO 2006/134257

(56) Documents cités:
- JP-A- 62 279 197
- US-A- 2 355 026
- US-A- 4 008 868
- US-A- 4 221 350
- US-A1- 2003 125 848

## Description

La présente invention a pour objet un procédé et un dispositif pour la conduite d'un aéronef roulant sur le sol, ainsi qu'un aéronef équipé d'un tel dispositif.

On sait que la conduite d'un aéronef au sol, c'est-à-dire le contrôle en lacet dudit aéronef, est principalement assuré par la gouverne de direction et le train avant directeur, disposé près du nez de ce dernier (communément appelé "roulette de nez"). A cet effet, la gouverne de direction et le train avant directeur sont commandés à partir d'un palonnier, à la disposition du pilote. Un enfoncement à droite, par exemple, du palonnier traduit la volonté du pilote d'engendrer un moment de lacet tendant à déplacer le nez de l'aéronef vers la droite, ce moment de lacet étant obtenu par un braquage à droite de la gouverne de direction et du train avant directeur.

On sait de plus que le freinage au sol des aéronefs est assuré par des freins installés sur les roues des trains d'atterrissage, ainsi que par des volets déporteurs (aérofreins) capables d'augmenter la traînée de l'aéronef et de plaquer celui-ci au sol pour augmenter l'efficacité des freins des roues et/ou par des inverseurs de poussée, les freins de roues étant commandés par un système capable de prendre en compte des ordres venant du pilote ou d'un dispositif automatique. Pour freiner l'aéronef au sol, le pilote dispose de deux pédales montées sur le palonnier et associées respectivement aux freins des roues disposées de part et d'autre de l'axe longitudinal de l'aéronef : ainsi, la pédale de droite peut commander les freins disposés à droite de l'aéronef et la pédale de gauche peut commander les freins disposés à gauche de celui-ci. S'il exerce des actions de freinage différentes sur les deux pédales de frein, le pilote produit un freinage différentiel entre les ensembles de roues disposés de part et d'autre de l'axe longitudinal de l'aéronef, ce freinage différentiel engendrant un moment de lacet pour l'aéronef.
Le document US 4, 008, 868 A est considéré comme l'art antérieur le plus proche car il décrit toutes les caractéristiques du préambule de la revendication 1.

La conduite d'un aéronef au sol peut donc également être obtenue par un tel freinage différentiel. Ainsi, lorsque le pilote de l'aéronef souhaite corriger la trajectoire latérale de l'aéronef au sol, il peut agir sur le palonnier, pour faire intervenir la gouverne de direction et le train avant directeur, et/ou sur les pédales de frein, pour engendrer un freinage différentiel.

On doit toutefois remarquer que la seule action sur les pédales de frein peut, dans certaines conditions telles que fort vent latéral, pannes de moteurs, etc ..., être insuffisante pour contrôler la trajectoire latérale de l'aéronef et conduire ce dernier à sortir de la piste de roulement.

Or, une telle situation peut se produire en cas de panne du palonnier. En effet, dans ce cas, seules les pédales de freins sont disponibles pour piloter en lacet l'aéronef roulant sur le sol.

La présente invention a pour objet de remédier à cet inconvénient et de permettre d'accroître le moment en lacet engendré sur l'aéronef par la seule action dissymétrique sur les pédales de freins.

A cette fin, selon l'invention, le procédé pour la conduite d'un aéronef roulant sur le sol, ledit aéronef comportant :
- un train de roues avant directeur ;
- une gouverne de direction, disposée à l'arrière dudit aéronef ;
- un palonnier à la disposition du pilote de l'aéronef, permettant d'adresser un ordre de commande combiné audit train de roues avant directeur et à ladite gouverne de direction, pour contrôler ledit aéronef en lacet ;
- au moins deux trains d'atterrissage, symétriques l'un de l'autre par rapport au plan vertical longitudinal médian de l'aéronef, les roues desdits trains d'atterrissage étant équipées de freins ; et
- deux organes de commande de freinage à la disposition dudit pilote, respectivement associés auxdits trains d'atterrissage et engendrant chacun un ordre de freinage pour commander les freins de roues du train d'atterrissage associé,
   est remarquable en ce que :

- on forme la différence entre lesdits ordres de freinage ;
- on transforme ladite différence des ordres de freinage en un ordre de commande additionnel pour ladite gouverne de direction et pour ledit train avant directeur ; et
- on applique ledit ordre de commande additionnel à ladite gouverne de direction et audit train avant directeur, à la double condition que :
   ■ ladite différence des ordres de freinage est supérieure à un premier seuil ; et
   ■ ledit ordre de commande combiné adressé par ledit palonnier à ladite gouverne de direction et audit train avant directeur est inférieur à un second seuil.

Ainsi, grâce à la présente invention, dans le cas où le palonnier est défaillant avec ses deux leviers bloqués au voisinage de la position neutre, une action de freinage différentiel de la part du pilote pourra entraîner une rotation dans le sens approprié de la gouverne de direction et du train de roues avant directeur, permettant le contrôle en lacet de la trajectoire de l'avion au sol. En revanche, si l'aéronef au sol est soumis à un fort vent de travers obligeant le pilote à contrôler la trajectoire de l'aéronef avec le palonnier, et éventuellement avec une action de freinage différentiel, ce dernier ne pourra pas exercer un effet complémentaire ni sur la position de la gouverne de direction, ni sur celle du train de roues avant directeur.

De façon connue, la course maximale de chacun desdits organes de commande de freinage est comprise entre une position neutre et une position de freinage maximal et, notamment, cette course maximale correspond à une rotation desdits organes de commande de freinage entre une valeur d'angle de rotation égale à zéro (dans ladite position neutre) et une valeur d'angle de rotation maximale (dans ladite position de freinage maximal).

Avantageusement, ledit premier seuil correspond à une fraction de ladite course maximale des organes de commande de freinage comprise entre le tiers et les deux-tiers et, de préférence, correspond au moins approximativement à la moitié de ladite course maximale, c'est-à-dire que ledit premier seuil est alors égal à la moitié de ladite valeur d'angle de rotation maximale.

Dans un mode de mise en oeuvre préféré de la présente invention, afin de prendre en compte ledit premier seuil, préalablement à ladite transformation en ordre de commande additionnel pour la gouverne de direction, ladite différence des ordres de freinage est convertie en une première fonction prenant la valeur zéro jusqu'audit premier seuil et croissant, de préférence linéairement, à partir dudit premier seuil, jusqu'à une valeur maximale atteinte pour la valeur maximale (égale à la valeur d'angle de rotation maximale) de ladite différence des ordres de freinage. Ladite valeur maximale de ladite première fonction est égale à ladite valeur maximale de ladite différence des ordres de freinage.

De façon similaire à ce qui a été rappelé ci-dessus pour lesdits organes de commande de freinage, la course en rotation maximale de chacun des leviers du palonnier est comprise entre une position neutre (correspondant à un angle de rotation nul) et une position correspondant au braquage maximal de la gouverne de direction (correspondant à une valeur d'angle maximale).

De préférence, la transformation de ladite différence des ordres de freinage en ordre de commande additionnel pour la gouverne de direction est obtenue en multipliant ladite première fonction par un coefficient égal au rapport entre ladite course maximale des leviers du palonnier et ladite course maximale desdits organes de commande de freinage.

Afin de prendre en compte ledit second seuil, ledit ordre de commande additionnel ainsi obtenu est soumis, avant addition audit ordre de commande combiné, à une limitation définissant, à l'aide dudit second seuil, un domaine à l'extérieur duquel ledit ordre de commande additionnel est nul et à l'intérieur duquel ledit ordre de commande additionnel a une autorité limitée sur ladite gouverne de direction et sur ledit train avant directeur. Le contour dudit domaine correspond à une fonction qui est nulle lorsque ledit ordre de commande combiné est égal audit second seuil et qui est égale audit second seuil lorsque ledit ordre de commande combiné est nul et varie linéairement entre ces valeurs.

Ledit second seuil correspond à une fraction, par exemple les deux-tiers, de ladite course maximale des leviers du palonnier.

Par précaution, chacun desdits ordres de freinage est limité avant formation de leur différence. De même, il est avantageux que la somme dudit ordre de commande combiné et dudit ordre de commande additionnel limité soit soumise à une limitation avant application à ladite gouverne de direction et audit train avant directeur.

La présente invention concerne de plus un dispositif pour la conduite d'un aéronef roulant sur le sol, ledit aéronef comportant :
- un train de roues avant directeur ;
- une gouverne de direction, disposée à l'arrière dudit aéronef ;
- un palonnier à la disposition du pilote de l'aéronef, permettant d'adresser un ordre de commande combiné audit train de roues avant directeur et à ladite gouverne de direction, pour contrôler ledit aéronef en lacet ;
- au moins deux trains d'atterrissage, symétriques l'un de l'autre par rapport au plan vertical longitudinal médian de l'aéronef, les roues desdits trains d'atterrissage étant équipées de freins ; et
- deux organes de commande de freinage à la disposition dudit pilote, respectivement associés auxdits trains d'atterrissage et engendrant chacun un ordre de freinage pour commander les freins de roues du train d'atterrissage associé.

Selon un mode de réalisation préféré, le dispositif de l'invention est remarquable en ce qu'il comporte :
- des moyens pour faire la différence entre lesdits ordres de freinage ;
- un générateur de fonction transformant ladite différence en une fonction prenant la valeur zéro jusqu'à un premier seuil et croissant, à partir dudit premier seuil, jusqu'à une valeur maximale atteinte pour la valeur maximale de ladite différence des ordres de freinage ;
- des moyens pour transformer ladite fonction en un ordre de commande additionnel pour ladite gouverne de direction et pour ledit train avant directeur ;
- des moyens de limitation aptes à limiter ledit ordre de commande additionnel et définissant, à l'aide d'un second seuil, un domaine à l'extérieur duquel ledit ordre de commande additionnel est nul et à l'intérieur duquel l'autorité dudit ordre de commande additionnel a une autorité limitée sur ladite gouverne de direction et sur ledit train avant directeur ;
- des moyens pour former la somme dudit ordre de commande combiné et dudit ordre de commande additionnel limité par ledit second générateur de fonction ; et
- des moyens pour appliquer ladite somme à ladite gouverne de direction et audit train avant directeur.

Les figures du dessin annexé feront bien comprendre comment l'invention peut être réalisée. Sur ces figures, des références identiques désignent des éléments semblables.

La figure 1 est une vue de face d'un avion civil gros porteur auquel peut s'appliquer la présente invention.

La figure 2 est une vue latérale de l'avion de la figure 1.

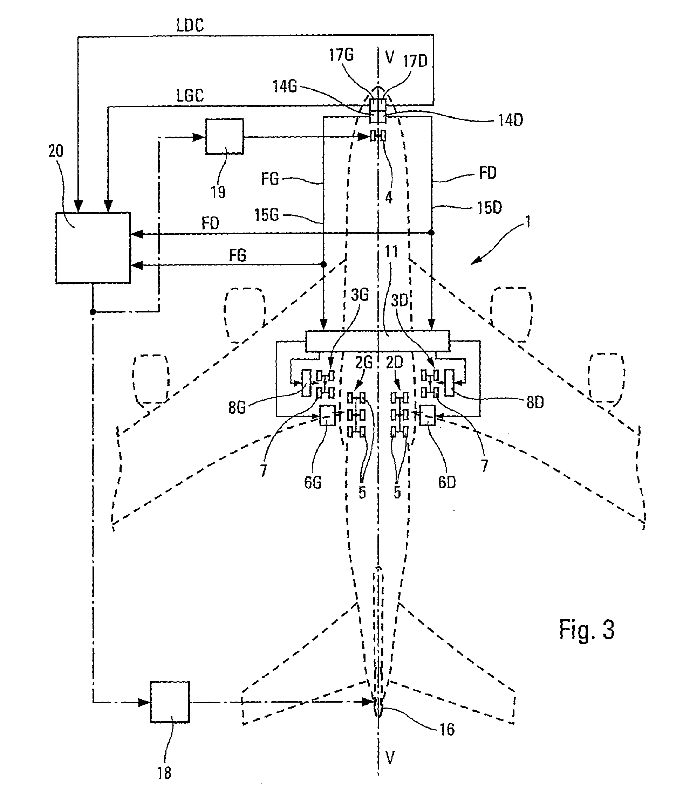

La figure 3 est une vue de dessus partielle de l'avion civil des figures 1 et 2, seul le contour dudit avion étant représenté pour laisser apparaître l'emplacement des divers trains de roues avec leur dispositif de freinage et le dispositif de commande en lacet au sol.

La figure 4 donne le schéma synoptique d'un exemple de réalisation du dispositif de commande en lacet au sol conforme à la présente invention.

Les figures 5 et 6 sont des diagrammes illustrant schématiquement et partiellement le fonctionnement de l'exemple de réalisation de la figure 4.

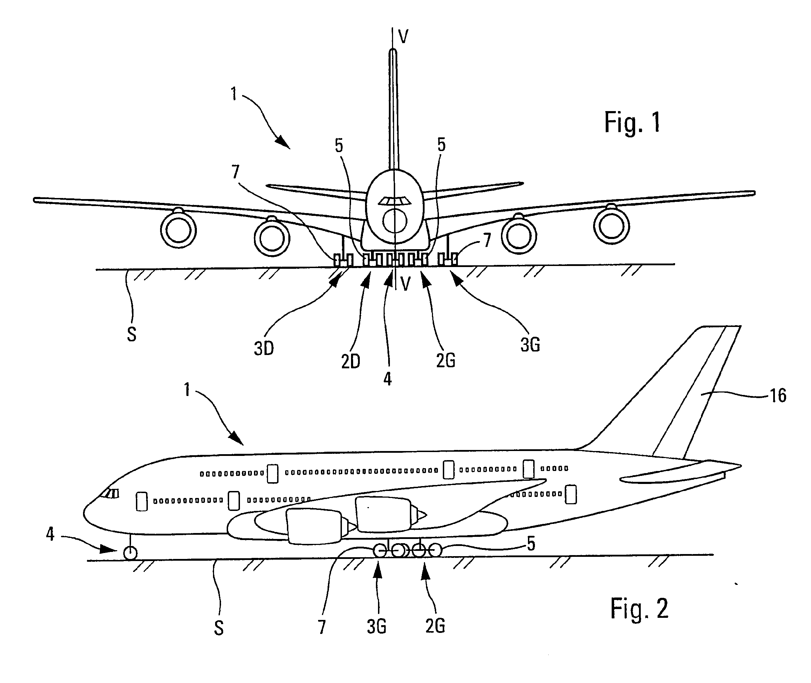

L'avion 1, montré schématiquement sur les figures 1 et 2 et roulant sur le sol S, comporte deux paires de trains de roues 2G, 2D et 3G, 3D, respectivement, ainsi qu'un train avant directeur 4, disposé près du nez de l'avion 1 (communément appelé "roulette de nez").

Les deux trains de roues 2G et 2D, disposés respectivement à gauche et à droite de l'avion 1, sont symétriques l'un de l'autre par rapport au plan vertical longitudinal médian V-V de l'avion 1. De même, les deux trains de roues 3G et 3D, également disposés respectivement à gauche et à droite de l'avion 1, sont symétriques l'un de l'autre par rapport audit plan V-V. En revanche, les deux trains de roues 2G et 2D sont plus proches dudit plan V-V (et donc l'un de l'autre) que les trains de roues 3G et 3D.

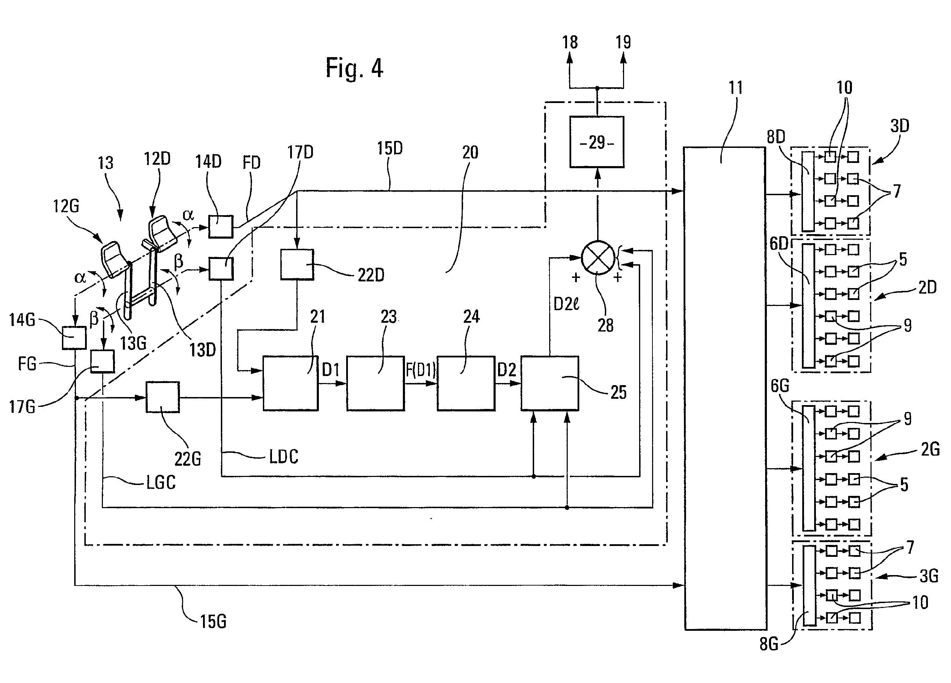

Chaque roue 5 des trains rapprochés 2G et 2D est équipée d'un frein individuel (schématisé sous la référence 9 sur la figure 4) et les freins individuels de chacun des trains 2G ou 2D sont commandés par un dispositif de commande 6G ou 6D, respectivement.

De même, chaque roue 7 des trains écartés 3G ou 3D est équipée d'un frein individuel (schématisé sous la référence 10 sur la figure 4) et les freins individuels de chacun des trains 3G ou 3D sont commandés par un dispositif de commande 8G ou 8D, respectivement.

Les dispositifs de commande 6G, 6D, 8G et 8D sont eux-mêmes commandés par un dispositif de répartition de freinage 11, recevant, respectivement par des lignes 15G et 15D, des ordres de freinage gauche FG et droit FD de deux transducteurs 14G et 14D respectivement associés à deux organes gauche 1 2G et droit 1 2D, à la disposition du pilote.

De façon connue, l'ordre de freinage gauche FG est tout spécialement utilisé pour freiner les roues 7 du train gauche écarté 3G et peut être utilisé pour freiner les roues 5 du train gauche rapproché 2G. De même, l'ordre de freinage droit FD est tout spécialement utilisé pour freiner les roues 7 du train droit écarté 3D et peut être utilisé pour freiner les roues 5 du train droit rapproché 2D.

D'autres organes de freinage (non représentés) sont de préférence mis à la disposition d'un copilote de l'avion 1.

Comme le montre schématiquement la figure 4, lesdits organes de freinage 12G et 12D peuvent être constitués par des pédales rotatives, articulées respectivement aux extrémités libres des leviers 13G et 13D du palonnier 13 de l'avion 1.

Lorsque le pilote, avec son pied gauche (ou droit) fait tourner la pédale gauche 1 2G (ou droite 1 2D), la rotation de ladite pédale est détectée par le transducteur gauche 14G (ou par le transducteur droit 14D), qui engendre l'ordre de freinage gauche FG (ou droit FD) correspondant, adressé audit dispositif de répartition de freinage 11. L'angle de rotation α de chaque pédale 12G ou 12D est compris entre 0 (pédale au repos) et αmax (rotation maximale) et l'ordre de freinage FG ou FD correspondant est fonction de la valeur dudit angle de rotation α.

De façon connue, le palonnier 13 est destiné, lorsque l'avion roule sur le sol, à commander la gouverne de direction 16 de l'avion 1 (voir la figure 2) et l'orientation du train avant directeur 4 de l'avion 1. A cette fin, deux transducteurs 17G et 17D sont respectivement associés aux deux leviers 13G et 13D du palonnier 13, de façon à engendrer des ordres de commande combinés en lacet vers la gauche LGC et vers la droite LDC, respectivement. L'angle de rotation β de chaque levier 13G ou 13D du palonnier 13 est compris entre 0 (levier au repos) et βmax (rotation maximale) et les ordres de commande combinés LGC et LDC sont appliqués à ladite gouverne de direction 16 et audit train avant directeur 4 respectivement par l'intermédiaire de dispositifs d'actionnement 18 et 19.

Conformément à la présente invention, les ordres de commande en lacet LGC et LDC, issus respectivement des transducteurs 17G et 17D, ainsi que les ordres de freinage FG et FD, issus respectivement des transducteurs 14G et 14D, sont transmis à un dispositif de traitement 20 apte à engendrer un ordre de commande additionnel D2ℓ pour la gouverne de direction 16 et pour le train avant directeur 4, dans le cas où le freinage différentiel est important, alors que l'ordre LGC ou LDC est faible.

Le dispositif de traitement 20 comporte un soustracteur 21 auquel les ordres de freinage FG et FD sont amenés, à partir des lignes 15G et 1 5D, par l'intermédiaire de limiteurs respectifs 22G et 22D destinés à éviter d'introduire dans le soustracteur 21 des données d'entrée complètement erronées. Par exemple, les limiteurs 22G et 22D imposent que FG et FD soient limités entre 0 et αmax.

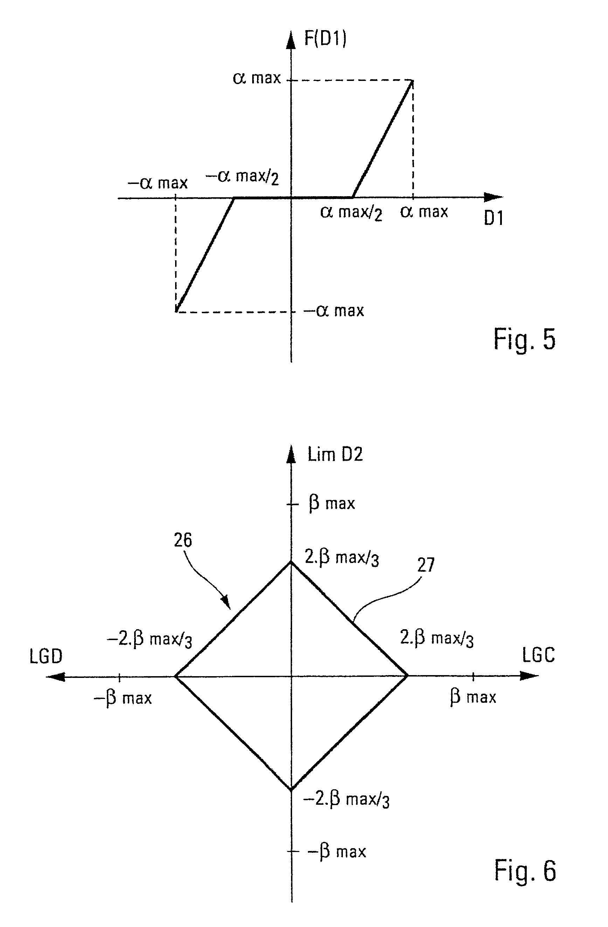

Ainsi, à sa sortie, le soustracteur 21 délivre un ordre de freinage différentiel D1, par exemple considéré comme positif si FG est plus grand que FD et comme négatif dans le cas inverse. L'ordre de freinage différentiel D1 est adressé à un générateur de fonction 23, apte à transformer l'ordre de freinage différentiel D1 en une fonction F(D1), dont un exemple est montré par la figure 5. Dans cet exemple, la fonction F(D1) est nulle en deçà de la moitié (αmax/2) de la course maximale des pédales 12G et 12D et est une fonction linéairement croissante de D1 entre ladite moitié de course maximale αmax/2 et la course maximale αmax. Pour D1 égale à αmax, F(D1) est également à αmax.

Ainsi, la fonction F(D1) est limitée à des ordres de freinage différentiels élevés supérieurs au seuil αmax/2. Elle est transmise à un convertisseur 24 apte à la transformer en un ordre pour la gouverne de direction 16. Par exemple, ledit convertisseur 24 multiplie la fonction F(D1) par un coefficient K égal au rapport entre le braquage maximal βmax des leviers du palonnier 13 et la rotation maximale αmax des pédales de freins 12G et 12D.

A la sortie du convertisseur 24, on obtient donc un ordre de braquage additionnel D2 pour la gouverne 16 et le train avant directeur 4. Cet ordre de braquage additionnel D2 est adressé à un limiteur 25 recevant les ordres de commande LGC et LDC issus des transducteurs 17G et 17D liés au palonnier 13 et engendrant une fonction LimD2 apte à limiter le domaine d'action de l'ordre D2 aux faibles ordres de braquage de gouverne de direction 16 et à limiter l'autorité des pédales de freins 12G et 12D sur la gouverne de direction 1 6 et sur le train directeur avant 4.

Sur la figure 6, on a représenté un exemple de domaine de limitation 26 engendré par le limiteur 25. Le domaine 26 est limité par un contour 27 répondant à une fonction qui est nulle, lorsque l'ordre de commande combiné LGC ou LGD est égal à un seuil 2.βmax/3 égal aux deux-tiers de la valeur maximale βmax de l'angle de braquage β des leviers 13G et 13D du palonnier 13, et qui est égale audit seuil 2.βmax/3 lorsque ledit ordre de commande combiné est nul. Entre ces deux points, la variation du contour 27 peut être linéaire.

A l'extérieur du domaine de limitation 26, le limiteur 25 annule l'ordre de braquage additionnel D2, alors qu'à l'intérieur dudit domaine ce dernier est obligé de varier en sens inverse de l'ordre de commande combiné LGC ou LGD.

Ainsi, à sa sortie, le limiteur 25 délivre un ordre de braquage additionnel limité D2ℓ, qui est additionné à l'ordre de commande combiné LGC ou LGD approprié dans un sommateur 28.

La somme ainsi obtenue est adressée à un limiteur 29, la limitant par exemple au domaine -βmax, + βmax, après quoi elle est transmise aux dispositifs d'actionnement 18 et 19 de la gouverne de direction 16 et du train avant directeur 4.

Eventuellement, l'ordre D2ℓ peut être également adressé à des surfaces aérodynamiques de l'avion 1 (par exemple des volets déporteurs non représentés) aptes à accroître le moment de lacet en roulement au sol.

Ainsi, sur fort vent de travers, le pilote de l'avion 1 contrôle la trajectoire de roulement de l'avion 1 avec le palonnier 13 et, si nécessaire, avec une action de freinage différentiel sur les pédales 12G, 12D. Le palonnier 13 étant fortement braqué, le freinage différentiel n'a aucun effet complémentaire, ni sur la position de la gouverne de direction 16, ni sur le train avant directeur 4.

Dans les mêmes conditions, si les leviers 13G et 13D sont bloqués, ils sont proches de leur position neutre, de sorte qu'une action de freinage différentiel agira sur les freins et sur les positions de la gouverne de direction 16 et du train avant directeur 4, permettant ainsi le contrôle de la trajectoire de l'avion 1.

On remarquera que, grâce à la présente invention, on limite de façon continue et progressive l'ordre additionnel D2ℓ en fonction de l'ordre LGC ou LGD provenant du palonnier 13, de manière que cet ordre additionnel D2ℓ vaut effectivement zéro lorsque l'ordre LGC ou LGD atteint un certain seuil (2.βmax/3), en laissant toujours la priorité à l'ordre LGC ou LGD.

## Revendications

1. Procédé pour la conduite d'un aéronef (1) roulant sur le sol (S), ledit aéronef comportant :
- un train de roues avant directeur (4) ;
- une gouverne de direction (16), disposée à l'arrière dudit aéronef (1) ;
- un palonnier (13) à la disposition du pilote de l'aéronef, permettant d'adresser un ordre de commande combiné audit train de roues avant directeur (4) et à ladite gouverne de direction (16), pour contrôler ledit aéronef en lacet ;
- au moins deux trains d'atterrissage (2G, 3G - 2D, 3D), symétriques l'un de l'autre par rapport au plan vertical longitudinal médian (V-V) de l'aéronef, les roues (5, 7) desdits trains d'atterrissage étant équipées de freins (9, 10) ; et
- deux organes de commande de freinage (12G-12D) à la disposition dudit pilote, respectivement associés auxdits trains d'atterrissage et engendrant chacun un ordre de freinage (FG, FD) pour commander les freins de roues du train d'atterrissage associé,
**caractérisé en ce que** :
- on forme la différence (D1) entre lesdits ordres de freinage (FG, FD) ;
- on transforme ladite différence des ordres de freinage (D1) en un ordre de commande (D2) additionnel pour ladite gouverne de direction (16) et pour ledit train avant directeur (4) ; et
- on applique ledit ordre de commande additionnel (D2) à ladite gouverne de direction (16) et audit train avant directeur (4), à la double condition que :
■ ladite différence des ordres de freinage (D1) est supérieure à un premier seuil ; et
■ ledit ordre de commande combiné adressé par ledit palonnier à ladite gouverne de direction et audit train avant directeur est inférieur à un second seuil.

2. Procédé selon la revendication 1, dans lequel la course maximale de chacun desdits organes de freinage (12G, 12D) est comprise entre une position neutre et une position de freinage maximal,
**caractérisé en ce que** ledit premier seuil correspond à une fraction de ladite course maximale comprise entre le tiers et les deux-tiers.

3. Procédé selon la revendication 2,
**caractérisé en ce que** ledit premier seuil correspond au moins approximativement à la moitié de ladite course maximale desdits organes de freinage (12G, 12D).

4. Procédé selon l'une quelconque des revendications 2 ou 3,
**caractérisé en ce que**, préalablement à ladite transformation en ordre de commande additionnel, ladite différence des ordres de freinage est convertie en une première fonction (F(D1)) prenant la valeur zéro jusqu'audit premier seuil et croissant à partir dudit premier seuil, jusqu'à une valeur maximale atteinte pour la valeur maximale de ladite différence des ordres de freinage.

5. Procédé selon la revendication 4,
**caractérisé en ce que** ladite première fonction croît linéairement entre ledit premier seuil et ladite valeur maximale de ladite différence des ordres de freinage.

6. Procédé selon l'une des revendications 4 ou 5,
**caractérisé en ce que** ladite valeur maximale de ladite fonction est au moins approximativement égale à ladite valeur maximale de ladite différence des ordres de freinage.

7. Procédé selon l'une quelconque des revendications 4 à 6,
**caractérisé en ce que** la transformation de la différence des ordres de freinage en un ordre de commande additionnel pour la gouverne de direction (16) est obtenue en multipliant ladite première fonction par un coefficient égal au rapport entre ladite course maximale des leviers du palonnier et ladite course maximale desdits organes de commande de freinage.

8. Procédé selon la revendication 7,
**caractérisé en ce que** ledit ordre de commande additionnel est soumis, avant addition audit ordre de commande combiné, à une limitation définissant, à l'aide dudit second seuil, un domaine (26) à l'extérieur duquel ledit ordre de commande additionnel est nul et à l'intérieur duquel l'autorité dudit ordre de commande additionnel a une autorité limitée sur ladite gouverne de direction (16) et sur ledit train avant directeur (4).

9. Procédé selon la revendication 8,
**caractérisé en ce que** le contour (27) dudit domaine (26) correspond à une fonction qui est nulle, lorsque ledit ordre de commande combiné est égal audit second seuil, et qui est égale audit second seuil, lorsque ledit ordre de commande combiné est nul.

10. Procédé selon la revendication 9,
**caractérisé en ce que** ladite fonction varie au moins approximativement linéairement entre sa valeur nulle et sa valeur égale audit second seuil.

11. Procédé selon l'une des revendications 8 à 10,
**caractérisé en ce que** ledit second seuil correspond à une fraction de la course maximale des leviers du palonnier (13).

12. Procédé selon la revendication 11,
**caractérisé en ce que** ledit second seuil correspond aux deux-tiers de la course maximale des leviers du palonnier (13).

13. Procédé selon l'une quelconque des revendications 1 à 12,
**caractérisé en ce que** chacun desdits ordres de freinage subit une limitation avant formation de leur différence.

14. Procédé selon l'une quelconque des revendications 8 à 13,
**caractérisé en ce que** la somme dudit ordre de commande combiné et dudit ordre de commande additionnel limité est soumise à une limitation avant application à ladite gouverne de direction et audit train avant directeur.

15. Dispositif pour la conduite d'un aéronef (1) roulant sur le sol (S), ledit aéronef comportant :
- un train de roues avant directeur (4) ;
- une gouverne de direction (16), disposée à l'arrière dudit aéronef ;
- un palonnier (13) à la disposition du pilote de l'aéronef, permettant d'adresser un ordre de commande combiné audit train de roues avant directeur (4) et à ladite gouverne de direction (16), pour contrôler ledit aéronef en lacet ;
- au moins deux trains d'atterrissage (2G, 3G ; 2D, 3D), symétriques l'un de l'autre par rapport au plan vertical longitudinal médian (V-V) de l'aéronef, les roues (5, 7) desdits trains d'atterrissage étant équipées de freins (9, 10) ; et
- deux organes de commande de freinage (1 2G, 12D) à la disposition dudit pilote, respectivement associés auxdits trains d'atterrissage et engendrant chacun un ordre de freinage pour commander les freins de roues du train d'atterrissage associé,
**caractérisé en ce qu'**il comporte :
- des moyens (21) pour faire la différence (D1) entre lesdits ordres de freinage ;
- un générateur de fonction (23) transformant ladite différence (D1) en une fonction (F(D1)) prenant la valeur zéro jusqu'à un premier seuil et croissant, à partir dudit premier seuil, jusqu'à une valeur maximale atteinte pour la valeur maximale de ladite différence (D1) des ordres de freinage ;
- des moyens (24) pour transformer ladite fonction (F(D1)) en un ordre de commande additionnel (D2) pour ladite gouverne de direction (16) et pour ledit train avant directeur (4) ;
- des moyens de limitation (25) aptes à limiter ledit ordre de commande additionnel (D2) et définissant, à l'aide d'un second seuil, un domaine (26) à l'extérieur duquel ledit ordre de commande additionnel est nul et à l'intérieur duquel l'autorité dudit ordre de commande additionnel a une autorité limitée sur ladite gouverne de direction et sur ledit train avant directeur ;
- des moyens (28) pour former la somme dudit ordre de commande combiné et dudit ordre de commande additionnel (D2ℓ) limité par lesdits moyens de limitation (25) ; et
- des moyens (18, 19) pour appliquer ladite somme à ladite gouverne de direction (16) et audit train avant directeur (4).

## Claims

1. A method for driving an aircraft (1) during its run over the ground (S), said aircraft comprising:
- a steerable nose gear (4);
- a rudder (16), disposed at the rear of said aircraft (1);
- a rudder bar (13) at the disposal of the pilot of the aircraft, making it possible to address a combined control command to said steerable nose gear (4) and to said rudder (16), to control said aircraft in yaw;
- at least two undercarriage legs (2G,3G - 2D,3D), symmetric with one another with respect to the longitudinal vertical mid-plane (V-V) of the aircraft, the wheels (5, 7) of said undercarriage legs being equipped with brakes (9, 10); and
- two braking control members (12G-12D) at the disposal of said pilot, respectively associated with said undercarriage legs and each producing a braking command (FG, FD) to control the wheel brakes of the associated undercarriage leg, **characterized in that**:
- the difference (D1) between said braking commands (FG, FD) is formed;
- said difference in the braking commands (D1) is transformed into an additional control command (D2) for said rudder (16) and for said steerable nose gear (4); and
- said additional control command (D2) is applied to said rudder (16) and to said steerable nose gear (4), on the dual condition that:
- said difference in the braking commands (D1) is greater than a first threshold; and
- said combined control command addressed by said rudder bar to said rudder and to said steerable nose gear is less than a second threshold.

2. The method as claimed in claim 1, in which the maximum travel of each of said braking members (12G, 12D) lies between a neutral position and a maximum threshold corresponds to a fraction of said maximum travel lying between one third and two-thirds.

3. The method as claimed in claim 2,**characterized in that** said first threshold corresponds at least approximately to half of said maximum travel of said braking members (12G, 12D).

4. The method as claimed in any one of claims 2 or 3,
**characterized in that**, prior to said transformation into an additional control command, said difference in the braking commands is converted into a first function (F(D1)) taking the value zero up to said first threshold and increasing onward of said first threshold, up to a maximum value attained for the maximum value of said difference in the braking commands.

5. The method as claimed in claim 4,
**characterized in that** said first function increases linearly between said first threshold and said maximum value of said difference in the braking commands.

6. The method as claimed in one of claims 4 or 5,
**characterized in that** said maximum value of said function is at least approximately equal to said maximum value of said difference in the braking commands .

7. The method as claimed in any one of claims 4 to 6,
**characterized in that** the transformation of the difference in the braking commands into an additional control command for the rudder (16) is obtained by multiplying said first function by a coefficient equal to the ratio of said maximum travel of the levers of the rudder bar to said maximum travel of said braking control members.

8. The method as claimed in claim 7,
**characterized in that** said additional control command is subjected, before addition to said combined control command, to a limitation defining, with the aid of said second threshold, a domain (26) outside which said additional control command is zero and inside which the authority of said additional control command has a limited authority on said rudder (16) and on said steerable nose gear (4).

9. The method as claimed in claim 8,
**characterized in that** the contour (27) of said domain (26) corresponds to a function which is zero, when said combined control command is equal to said second threshold, and which is equal to said second threshold, when said combined control command is zero.

10. The method as claimed in claim 9,
**characterized in that** said function varies at least approximately linearly between its zero value and its value equal to said second threshold.

11. The method as claimed in one of claims 8 to 10,
**characterized in that** said second threshold corresponds to a fraction of the maximum travel of the levers of the rudder bar (13).

12. The method as claimed in claim 11,
**characterized in that** said second threshold corresponds to two-thirds of the maximum travel of the levers of the rudder bar (13).

13. The method as claimed in any one of claims 1 to 12,
**characterized in that** each of said braking commands undergoes a limitation before formation of their difference.

14. The method as claimed in any one of claims 8 to 13,
**characterized in that** the sum of said combined control command and of said limited additional control command is subjected to a limitation before application to said rudder and to said steerable nose gear.

15. A device for driving an aircraft (1) during its run over the ground (S), said aircraft comprising:
- a steerable nose gear (4);
- a rudder (16), disposed at the rear of said aircraft;
- a rudder bar (13) at the disposal of the pilot of the aircraft, making it possible to address a combined control command to said steerable nose gear (4) and to said rudder (16), to control said aircraft in yaw;
- at least two undercarriage legs (2G,3G; 2D,3D), symmetric with one another with respect to the longitudinal vertical mid-plane (V-V) of the aircraft, the wheels (5, 7) of said undercarriage legs being equipped with brakes (9, 10); and
- two braking control members (12G, 12D) at the disposal of said pilot, respectively associated with said undercarriage legs and each producing a braking command to control the wheel brakes of the associated undercarriage leg,
**characterized in that** it comprises:
- means (21) for forming the difference (D1) between said braking commands;
- a function generator (23) transforming said difference (D1) into a function (F(D1)) taking the value zero up to a first threshold and increasing, onward of said first threshold, up to a maximum value attained for the maximum value of said difference (D1) in the braking commands;
- means (24) for transforming said function (F(D1)) into an additional control command (D2) for said rudder (16) and for said steerable nose gear (4);
- limitation means (25) able to limit said additional control command (D2) and defining, with the aid of a second threshold, a domain (26) outside which said additional control command is zero and inside which the authority of said additional control command has a limited authority on said rudder and on said steerable nose gear;
- means (28) for forming the sum of said combined control command and of said additional control command (D2ℓ) limited by said limitation means (25); and
- means (18, 19) for applying said sum to said rudder (16) and to said steerable nose gear (4).

## Patentansprüche

1. Verfahren zur Lenkung eines auf dem Boden (S) rollenden Flugzeugs (1), wobei das Flugzeug Folgendes umfasst:
- ein lenkbares Bugfahrwerk (4),
- ein am Heck des Flugzeugs (1) angeordnetes Seitenruder (16),
- eine Fußsteuerung (13), die dem Piloten des Flugzeugs zur Verfügung steht und es ermöglicht, zur Giersteuerung des Flugzeugs einen kombinierten Steuerbefehl an das lenkbare Bugfahrwerk (4) und an das Seitenruder (16) zu adressieren,
- mindestens zwei Fahrwerke (2G, 3G - 2D, 3D), die in Bezug auf die vertikale Längsmittelebene (V-V) des Flugzeugs zueinander symmetrisch sind, wobei die Räder (5, 7) der Fahrwerke mit Bremsen (9, 10) ausgerüstet sind und
- zwei dem Piloten zur Verfügung stehende Bremssteuerorgane (12G-12D), die den Fahrwerken jeweils zugeordnet sind und die jeweils einen Bremsbefehl (FG, FD) für die Ansteuerung der Radbremsen des zugehörigen Fahrwerks erzeugen,
**dadurch gekennzeichnet, dass**:
- die Differenz (D1) zwischen den Bremsbefehlen (FG, FD) gebildet wird,
- die Differenz der Bremsbefehle (D1) in einen zusätzlichen Steuerbefehl (D2) für das Seitenruder (16) und für das lenkbare Bugfahrwerk (4) transformiert wird und
- der zusätzliche Steuerbefehl (D2) auf das Seitenruder (16) und auf das lenkbare Bugfahrwerk (4) angewandt wird unter der zweifachen Bedingung, dass:
• die Differenz der Bremsbefehle (D1) höher als ein erster Schwellenwert ist und
• der von der Fußsteuerung an das Seitenruder und an das lenkbare Bugfahrwerk adressierte kombinierte Steuerbefehl kleiner als ein zweiter Schwellenwert ist.

2. Verfahren nach Anspruch 1, bei dem der Maximalweg der Bremsorgane (12G, 12D) jeweils im Bereich zwischen einer Neutralposition und einer maximalen Bremsposition liegt,
**dadurch gekennzeichnet, dass** der erste Schwellenwert einem Bruchteil des Maximalwegs entspricht, der zwischen einem Drittel und zwei Dritteln liegt.

3. Verfahren nach Anspruch 2,
**dadurch gekennzeichnet, dass** der erste Schwellenwert zumindest annähernd der Hälfte des Maximalwegs der Bremsorgane (12G, 12D) entspricht.

4. Verfahren nach Anspruch 2 oder 3,
**dadurch gekennzeichnet, dass** die Differenz der Bremsbefehle vor der Transformation in einen zusätzlichen Steuerbefehl in eine erste Funktion (F(D1)) transformiert wird, die bis zu dem ersten Schwellenwert den Wert Null annimmt und ab dem ersten Schwellenwert bis zu einem Maximalwert ansteigt, der bei dem Maximalwert der Differenz der Bremsbefehle erreicht wird.

5. Verfahren nach Anspruch 4,
**dadurch gekennzeichnet, dass** die erste Funktion zwischen dem ersten Schwellenwert und dem Maximalwert der Differenz der Bremsbefehle linear ansteigend verläuft.

6. Verfahren nach Anspruch 4 oder 5,
**dadurch gekennzeichnet, dass** der Maximalwert der Funktion zumindest annähernd gleich dem Maximalwert der Differenz der Bremsbefehle ist.

7. Verfahren nach einem der Ansprüche 4 bis 6,
**dadurch gekennzeichnet, dass** die Transformation der Differenz der Bremsbefehle in einen zusätzlichen Steuerbefehl für das Seitenruder (16) durch Multiplikation der ersten Funktion mit einem Koeffizienten erhalten wird, der gleich dem Verhältnis zwischen dem Maximalweg der Hebel der Fußsteuerung und dem Maximalweg der Bremssteuerorgane ist.

8. Verfahren nach Anspruch 7,
**dadurch gekennzeichnet, dass** der zusätzliche Steuerbefehl vor der Addition zu dem kombinierten Steuerbefehl einer Begrenzung unterzogen wird, die mithilfe des zweiten Schwellenwerts einen Bereich (26) definiert, außerhalb dessen der zusätzliche Steuerbefehl Null ist und innerhalb dessen die Autorität des zusätzlichen Steuerbefehls eine begrenzte Autorität über das Seitenruder (16) und über das lenkbare Bugfahrwerk (4) hat.

9. Verfahren nach Anspruch 8,
**dadurch gekennzeichnet, dass** die Kontur (27) des Bereichs (26) einer Funktion entspricht, die Null ist, wenn der kombinierte Steuerbefehl gleich dem zweiten Schwellenwert ist und die gleich dem zweiten Schwellenwert ist, wenn der kombinierte Steuerbefehl Null ist.

10. Verfahren nach Anspruch 9,
**dadurch gekennzeichnet, dass** die Funktion zwischen ihrem Nullwert und ihrem Wert, der gleich dem zweiten Schwellenwert ist, zumindest annähernd linear variiert.

11. Verfahren nach einem der Ansprüche 8 bis 10,
**dadurch gekennzeichnet, dass** der zweite Schwellenwert einem Bruchteil des Maximalwegs der Hebel der Fußsteuerung (13) entspricht.

12. Verfahren nach Anspruch 11,
**dadurch gekennzeichnet, dass** der zweite Schwellenwert zwei Dritteln des Maximalwegs der Hebel der Fußsteuerung (13) entspricht.

13. Verfahren nach einem der Ansprüche 1 bis 12,
**dadurch gekennzeichnet, dass** jeder der Bremsbefehle vor der Bildung ihrer Differenz eine Begrenzung erfährt.

14. Verfahren nach einem der Ansprüche 8 bis 13,
**dadurch gekennzeichnet, dass** die Summe des kombinierten Steuerbefehls und des begrenzten zusätzlichen Steuerbefehls vor Anwendung auf das Seitenruder und auf das lenkbare Bugfahrwerk einer Begrenzung unterzogen wird.

15. Vorrichtung zur Lenkung eines auf dem Boden (S) rollenden Flugzeugs (1), wobei das Flugzeug Folgendes umfasst:
- ein lenkbares Bugfahrwerk (4),
- ein am Heck des Flugzeugs angeordnetes Seitenruder (16),
- eine Fußsteuerung (13), die dem Piloten des Flugzeugs zur Verfügung steht und es ermöglicht, zur Giersteuerung des Flugzeugs einen kombinierten Steuerbefehl an das lenkbare Bugfahrwerk (4) und an das Seitenruder (16) zu adressieren,
- mindestens zwei Fahrwerke (2G, 3G - 2D, 3D), die in Bezug auf die vertikale Längsmittelebene (V-V) des Flugzeugs zueinander symmetrisch sind, wobei die Räder (5, 7) der Fahrwerke mit Bremsen (9, 10) ausgerüstet sind und
- zwei dem Piloten zur Verfügung stehende Bremssteuerorgane (12G-12D), die den Fahrwerken jeweils zugeordnet sind und die jeweils einen Bremsbefehl für die Ansteuerung der Radbremsen des zugehörigen Fahrwerks erzeugen,
**dadurch gekennzeichnet, dass** sie Folgendes umfasst:
- Mittel (21) zur Bildung der Differenz (D1) zwischen den Bremsbefehlen,
- einen Funktionsgenerator (23), der die Differenz (D1) in eine Funktion (F(D1)) transformiert, die bis zu einem ersten Schwellenwert den Wert Null annimmt und ab dem ersten Schwellenwert bis zu einem Maximalwert ansteigt, der bei dem Maximalwert der Differenz der Bremsbefehle erreicht wird,
- Mittel (24) zum Transformieren der Funktion (F(D1)) in einen zusätzlichen Steuerbefehl (D2) für das Seitenruder (16) und für das lenkbare Bugfahrwerk (4),
- Begrenzungsmittel (25), die geeignet sind, den zusätzlichen Steuerbefehl (D2) zu begrenzen und die mithilfe eines zweiten Schwellenwerts einen Bereich (26) definieren, außerhalb dessen der zusätzliche Steuerbefehl Null ist und innerhalb dessen die Autorität des zusätzlichen Steuerbefehls eine begrenzte Autorität über das Seitenruder und über das lenkbare Bugfahrwerk hat,
- Mittel (28) zur Bildung der Summe des kombinierten Steuerbefehls und des durch die Begrenzungsmittel (25) begrenzten zusätzlichen Steuerbefehls (D2ℓ) und
- Mittel (18, 19), um die Summe auf das Seitenruder (16) und auf das lenkbare Bugfahrwerk (4) anzuwenden.
